# EUROPEAN PATENT APPLICATION

(11) **EP 3 232 249 A1**
(43) Date of publication of application: **18.10.2017**
(21) Application number: 15867641.1
(22) Date of filing: 04.12.2015
(51) Int. Cl.: G02B 27/01, B60K 35/00, H04N 5/64

(54) **HEAD-UP DISPLAY DEVICE**

(30) Priority: 10.12.2014 JP 2014249485
(71) Applicant: Nippon Seiki Co., Ltd., Nagaoka-shi, Niigata 940-8580 (JP)
(72) Inventor: TAKADA,Hidehisa, Nagaoka Niigata (JP); OGURO,Yuji, Nagaoka Niigata (JP); OGASAWARA,Yukio, Nagaoka Niigata (JP)
(74) Representative: Carpmaels & Ransford LLP
(86) International application number: PCT/JP2015/084137
(87) International publication number: WO 2016/093164

(57) **Abstract**

Provided is a head-up display device with which the vibration resistance of a combiner after installation is improved, and with which the combiner can easily be installed and removed. This head-up display device 1 is equipped with: a display unit 2 that emits display light L; a combiner 5 that receives the display light L and displays a virtual image; a combiner holder 6 that supports the combiner 5; and a chassis 8 that houses the display unit 2 and has a mounting unit 7 on which the combiner holder 6 is mounted. The mounting unit 7 has a securing lever 70 capable of rotating around a shaft part 71, and when a pressing bar 701 of the securing lever 70 is rotated in the direction toward the combiner holder 6 while the combiner holder 6 is mounted on the mounting unit 7, the securing lever 70 secures the combiner holder 6 on the mounting unit 7. Furthermore, with this head-up display (HUD) device 1, when the pressing bar 701 is rotated in the other direction while the combiner holder 6 is mounted on the mounting unit 7, the attachment of the combiner holder 6 to the mounting unit 7 is released.

## Description

### TECHNICAL FIELD

The present invention relates to a head-up display device provided with a detachable combiner.

### BACKGROUND ART

Patent Literature 1 describes a conventional head-up display device (hereinafter, also referred to as an HUD device) in which a combiner that displays a virtual image is configured so as to be able to be detached from the main body for maintenance such as cleaning and replacing of the combiner.

### CITATION LIST

### PATENT LITERATURE

Patent Literature 1: Japanese Unexamined Patent Application Publication No. 11-85052

### SUMMARY OF THE INVENTION

### PROBLEMS TO BE SOLVED BY THE INVENTION

However, in the HUD device described in Patent Literature 1, there is room for improvement in terms of vibration resistance after the combiner is attached, and the ease with which the combiner is attached and detached.

The present invention has been made in view of the problem described above, and it is an object of the present invention to provide a head-up display device that improves vibration resistance after a combiner is installed, and in which the combiner is able to be attached and detached easily.

A head-up display device according to the present invention, that includes: a display 2 that emits display light L; a combiner 5 that receives the display light L and displays a virtual image; a combiner holder 6 that supports the combiner 5; and a case 8 that houses the display and has a placement part 7 that places the combiner holder 6, wherein the placement part 7 has a fixing lever 70 that is able to rotate around a predetermined shaft (shaft part 71) of the placement part 7, in a state in which the combiner holder 6 is placed on the placement part 7, the fixing lever 70 fixes the combiner holder 6 to the placement part 7 when one end of the fixing lever 70 rotates in one direction toward the combiner holder 6, and in a state in which the combiner holder 6 is fixed to the placement part 7, the fixing lever 70 releases the fixing of the combiner holder 6 to the placement part 7 when the one end of the fixing lever 70 rotates in the other direction.

Further, preferably, the head-up display device 1 according to the present invention, wherein the combiner holder 6 has a leg part 62 that has a curved surface 620 on a side surface, the placement part 7 has an engagement groove 75 that places the leg part 62, the engagement groove 75 has a V-shaped inner wall that corresponds to the curved surface 620 of the leg part 62, and the curved surface 620 is pushed against the V-shaped inner wall by the one end of the fixing lever 70 (a press bar 701), such that the combiner holder 6 is fixed to the placement part 7.

Further, preferably, the head-up display device 1 according to the present invention, wherein the one end of the fixing lever 70 (the press bar 701) has a curved surface that pushes on the leg part 62, and the leg part 62 has an inclined surface 621 on a surface that is pushed on by the curved surface 620 of the one end.

Further, preferably, the head-up display device 1 according to the present invention, comprising: urging means for urging the one end of the fixing lever 70 (the press bar 701) to rotate in the one direction.

Further, preferably, the head-up display device 1 according to the present invention, wherein the urging means is a spring 74 that pulls on the one end of the fixing lever 70 (the press bar 701).

### EFFECT OF THE INVENTION

According to the present invention, a head-up display device that improves vibration resistance after a combiner is installed, and in which the combiner is able to be attached and detached easily, is able to be provided.

### BRIEF DESCRIPTION OF THE DRAWINGS

[Fig. 1] Fig. 1 is a structural schematic view of an embodiment of the present invention.
[Fig. 2] Fig. 2 is a perspective view of the construction of a combiner and a combiner holder according to the embodiment.
[Fig. 3] Fig. 3 is a perspective view of the construction of a placement part and a combiner holder according to the embodiment.
[Fig. 4] Fig. 4 is a view showing engagement of the placement part and the combiner holder according to the embodiment. In the drawing, (a) is a view showing engagement as viewed from above, and (b) is a view showing engagement as viewed from the side.
[Fig. 5] Fig. 5 is a view illustrating, as viewed from the side (the diagram on the left) and as viewed from above (the diagram on the right), a procedure for fixing the combiner holder according to the embodiment to the placement part.

### MODE FOR CURRYING OUT THE INVENTION

An HUD device 1 according to an embodiment of the present invention will be described with reference to the accompanying drawings.

The HUD device 1 is mainly composed of a display 2 that emits display light L toward a plane mirror, a plane mirror 3 that reflects the display light L, a control board 4 that controls the display 2, a combiner 5 that receives the display light L reflected by the plane mirror 3 and displays a virtual image, a combiner holder 6 that supports the combiner 5, a placement part 7 with which the combiner holder 6 detachably engages, and a case 8 that houses the display 2, the plane mirror 3, the control board 4, and the placement part 7.

When displaying an image showing vehicle information, the display 2 emits the display light L that shows the image. The display 2 is formed by a transmissive liquid crystal display formed by a liquid crystal panel and a backlight light source, or a self-luminescent display, for example.

The plane mirror 3 is a reflection mirror that bends, by reflecting, the optical path from the display 2 to the combiner 5. The plane mirror 3 is formed by a reflection mirror in which a planar-shaped reflective surface is formed by depositing a metal such as aluminum, on resin material such as polycarbonate (PC), for example. The distance from the combiner 5 to where the virtual image is formed can be lengthened by lengthening the distance of the optical path by bending the optical path with the plane mirror 3.

The control board 4 is a printed circuit board on which a control part (not shown) that controls the operation of the display 2 is mounted. The control part is formed by a micro-computer having a storage device and a computing device, for example, and causes the display 2 to display an image by performing appropriate computations with the computing device, in accordance with an operating program stored in the storage device beforehand, on the basis of various kinds of vehicle information obtained from an intra-vehicle network and various sensors.

The combiner 5 is formed by a plate-shaped half-mirror that has a curved surface, and a hologram element and the like, and displays a virtual image with the display light L. A through-hole for fixing the combiner 5 to a combiner holder 6 that will be described later is formed in the combiner 5.

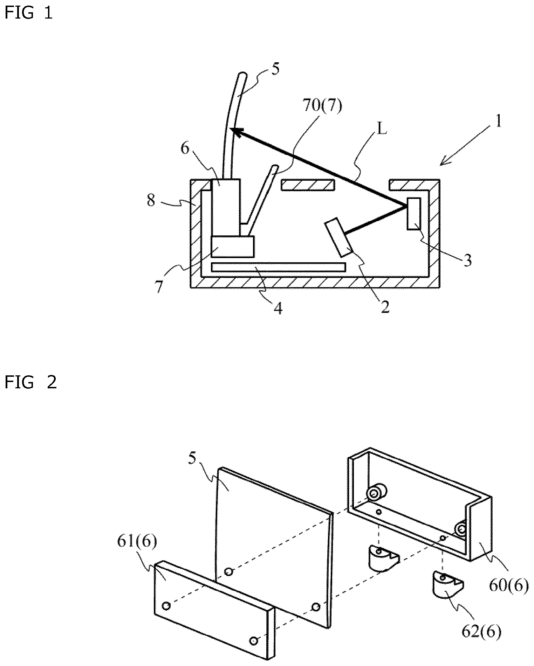

The combiner holder 6 is a holder that supports and fixes the combiner 5. The combiner holder 6 is mainly composed of a back holder 60 and a front holder 61 that are made of resin material such as PC, for example, and a leg part 62 made of resin material that is extremely wear resistant and is self-lubricating, such as polyacetal (POM), for example, as shown in Fig. 2.

A boss is provided on the back holder 60, in a position corresponding to the through-hole bored in the combiner 5, and a through-hole is provided in the front holder 61, in a position corresponding to the through-hole bored in the combiner 5. The combiner holder 6 sandwiches the combiner 5 between the back holder 60 and the front holder 61, and fixes the combiner 5 in place with screws.

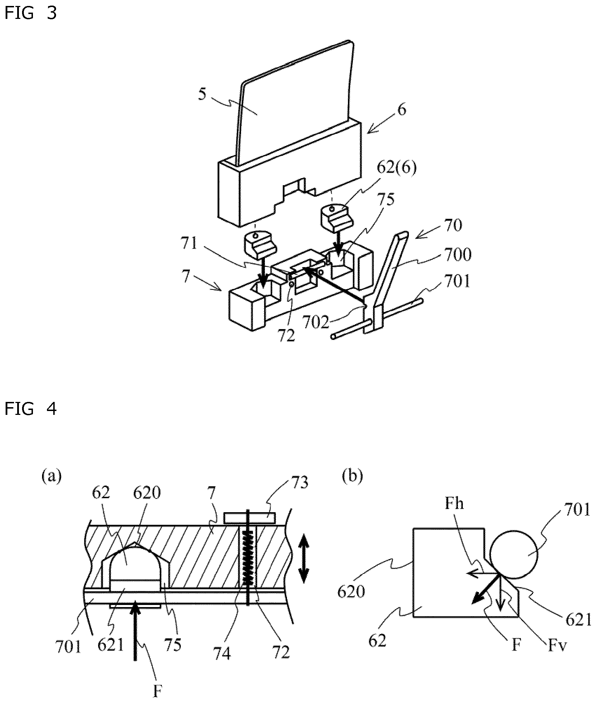

Also, the leg part 62 is screw-fixed to a lower surface of the back holder 60. The leg part 62 is placed in an engagement groove 75 of the placement part 7 that will be described later. The leg part 62 has a curved surface 620 on a side surface, and an inclined surface 621 on a surface opposite the curved surface, as shown in Fig. 4.

The placement part 7 is mainly made of a polymer alloy in which PC and polyethylene terephthalate (PET), for example, have been chemically bonded together. The holder 6 is configured to be detachable. The placement part 7 has a fixing lever 70, a shaft part 71, a through-hole 72, a stopper pin 73, a spring (urging means) 74, and an engagement groove 75, as shown in Fig. 3 and Fig. 4.

The fixing lever 70 is formed by a lever in which a cylindrical press bar 701 made of stainless steel (SUS) has been inserted into a base member 700 made of a polymer alloy of PC and PET. A bearing part 702 that receives the shaft part 71 is formed on the base member 700 of the fixing lever 70. The fixing lever 70 is configured so as to be able to rotate in a direction (one direction) in which the press bar 701 moves toward the engagement groove 75 of the placement part 7, and in the other direction, around the shaft part 71, in a state in which the bearing part 702 and the shaft part 71 are fitted together. Also, the fixing lever 70 is configured such that the side (the other end) of the base member 700 through which the press bar 701 is not inserted is exposed from the case 8, thus enabling a passenger in the vehicle to pivotally operate the fixing lever 70.

The shaft part 71 is a cylindrical shaft made of SUS, for example, and is provided in the center of the placement part 7, as shown in Fig. 3, and is a rotating shaft of the fixing lever 70.

The through-hole 72 is bored, one to the left and one to the right of the fixing lever 70 that is fitted to the shaft part 71, in the placement part 7, and the spring 74 formed by a coil spring, for example, is inserted through the through-hole 72. As shown in Fig. 4, one side of the spring 74 inserted though the through-hole 72 is fixed to the press bar 701, and the other side is fixed to the cylindrical stopper pin 73 made of SUS, for example. The fixing lever 70 is urged toward the engagement groove 75 by the press bar 701 and the stopper pin 73 being pulled toward each other by the spring 74.

The engagement groove 75 is a groove that places the leg part 62 of the holder 6. A wall surface of the engagement groove 75 that corresponds to the curved surface 620 of the leg part 62 has a V-shape, as shown in Fig. 4.

The case 8 is a case body that is made of impermeable resin such as PC, for example. The display 2, the plane mirror 3, the control board 4, and the placement part 7 are housed and fixed inside the case 8, as shown in Fig. 1.

Hereinabove is described the construction of the HUD device 1. Next, the installation procedure of the combiner 5 in the HUD device 1 will be described.

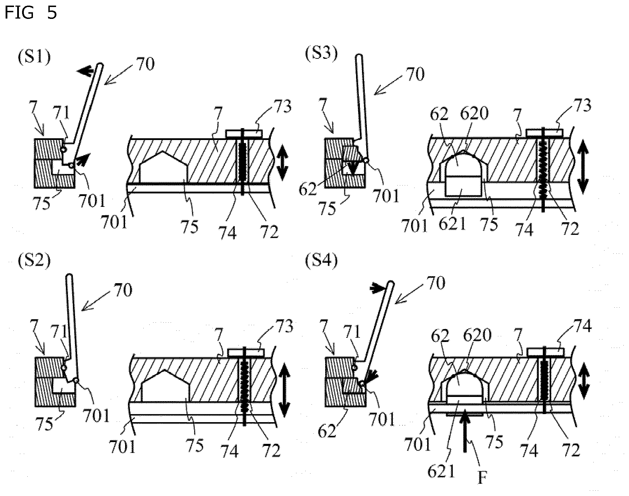

First, in a state in which the combiner holder 6 to which the combiner 5 is fixed is not installed on the placement part 7, the press bar 701 of the fixing lever 70 is in a state S1 urged toward the engagement groove 75, as shown in Fig. 5 (S1).

In state S1, when force is applied to the side of the base member 700 through which the press bar 701 is not inserted (i.e., the other end of the fixing lever 70) such that the press bar 701 (the one end of the fixing lever 70) rotates in the direction away from the engagement groove 75 (i.e., in the other direction), the press bar 701 moves in the direction away from the engagement groove 75, and comes to be in a state S2 in which there is a space that enables the leg part 62 of the combiner holder 6 to which the combiner 5 is fixed to be placed in the engagement groove 75, as shown in Fig. 5 (S2).

In state S2, while the force is kept applied to the other end of the fixing lever 70, the combiner holder 6 to which the combiner 5 is fixed is placed in the engagement groove 75 such that a curved surface 620 of the leg part 62 of the combiner holder 6 faces the V-shaped inner wall of the engagement groove 75, as shown in Fig. 5 (S3). This state is state S3.

In state S3, as shown in Fig. 5 (S4), when the force applied to the other end of the fixing lever 70 is released, the press bar 701 and the stopper pin 73 are pulled toward each other by the restoring force of the spring 74, such that the one end of the fixing lever 70 moves toward the engagement groove 75. Consequently, the one end of the fixing lever 70 comes to be in a state S4 in which the curved surface 620 of the leg part 62 presses on the V-shaped inner wall of the engagement groove 75.

Here, the curved surface of the press bar 701 and the inclined surface 621 of the leg part 62 are disposed such that a force F that presses on the inclined surface 621 is applied perpendicular to the inclined surface 621, as shown in Fig. 4 (b). That is, with the force F, a force Fh that pushes the leg part 62 toward the inner wall side of the V-shaped groove of the engagement groove 75 and a force Fv that pushes the leg part 62 toward the bottom surface side of the engagement groove 75 act evenly. As a result, the leg part 62 is fixed in both the longitudinal direction and the vertical direction. Also, the leg part 62 is positioned by the curved surface 620 being pushed against the inner wall of the V-shaped groove of the engagement groove 75 by the force Fh, so the leg part 62 is also fixed in the lateral direction orthogonal to the force Fh. As a result, the combiner holder 6 to which the combiner 5 is fixed is fixed to the placement part 7 in the vertical, longitudinal, and lateral directions, and is thus highly vibration resistant and firmly fixed. Incidentally, with the V-shaped groove of the engagement groove 75 that positions the leg part 62 in the lateral direction, the smaller and sharper the angle of the V-shape is, the greater the vibration resistance in the lateral direction is.

Hereinabove, the installation procedure of the combiner 5 in the HUD device 1 has been described. The procedure for removing the combiner 5 in the HUD device 1 is the reverse of the procedure described above.

In this way, the HUD device 1 is provided with the display 2 that emits the display light L, the combiner 5 that receives the display light L and displays a virtual image, the combiner holder 6 that supports the combiner 5, and the case 8 that houses the display 2 and has a placement part 7 that places the combiner holder 6. The placement part 7 has the fixing lever 70 that is able to rotate around a predetermined shaft (the shaft part 71) of the placement part 7. In the state S3 in which the combiner holder 6 is placed on the placement part 7, the fixing lever 70 fixes the combiner holder 6 to the placement part 7 when one end (the press bar 701) of the fixing lever 70 is rotated in the direction toward the combiner holder 6. Also, in the state S4 in which the combiner holder 6 is fixed to the placement part 7, the fixing of the combiner holder 6 to the placement part 7 is released in the HUD device 1 when the one end of the fixing lever 70 rotates in the other direction. Accordingly, it is possible to provide a head-up display device in which the combiner holder 6 to which the combiner 5 is fixed is fixed to the placement part 7 and can easily be attached and detached.

Also, the combiner holder 6 has the leg part 62 that has the curved surface 620 on a side surface, the placement part 7 has the engagement groove 75 that places the leg part 62, and the engagement groove 75 has the V-shaped inner wall that corresponds to the curved surface 620 of the leg part 62. As a result, the curved surface 620 is pushed against the V-shaped inner wall of the engagement groove 75 by one end (the press bar 701) of the fixing lever 70, such that the combiner holder 6 is fixed in the longitudinal and lateral directions to the placement part 7.

Also, the one end (the press bar 701) of the fixing lever 70 has the curved surface that pushes on the leg part 62, and the leg part 62 has the inclined surface 621 on the surface that is pushed on by the curved surface of the one end (the press bar 701). Therefore, the force F with which the curved surface 620 of the leg part 62 is pushed on by the press bar 701 acts as the force Fh that pushes the leg part 62 toward the inner wall side of the V-shaped groove of the engagement groove 75, and the force Fv that pushes the leg part 62 toward the bottom surface side of the engagement groove 75, such that the leg part 62 is fixed in both the longitudinal direction and the vertical direction.

Also, urging means (the spring 74) that urges the one end (the press bar 701) of the fixing lever 70 to rotate in the direction toward the combiner holder 6 is provided. With the spring 74, one side of the spring 74 that is inserted through the through-hole 72 is fixed to the press bar 701, and the other side is fixed to the stopper pin 73, such that the press bar 701 and the stopper pin 73 are pulled toward each other and the press bar 701 is urged toward the engagement groove 75. Accordingly, when the force F applied to the other end of the fixing lever 70 (i.e., the side of the base member 700 through which the press bar 701 is not inserted) of the head-up display device 1 that is in the state S3 in which the combiner holder 6 is engaged with the placement part 7 is released, the press bar 701 of the fixing lever 70 moves toward the engagement groove 75 due to the restoring force of the spring 74, such that the state S4 in which the combiner holder 6 is fixed to the placement part 7 by the press bar 701 is established, thereby improving operability.

Incidentally, various improvements and design changes are possible without departing from the spirit of the present invention.

For example, in the embodiment, a pull spring is used as the urging means, but any of one of a variety of types of springs such as a leaf spring that urges the other end of the fixing lever 70 to press against the placement part 7 may also be selected as appropriate.

Further, with the inclined surface 621 of the leg part 62 that is pushed on by the curved surface of the press bar 701, the angle of the inclined surface 621 may also be determined as appropriate in accordance with the distribution of the force Fh of the force F, which pushes the leg part 62 toward the inner wall side of the V-shaped groove of the engagement groove 75, and the force Fv of the force F, which pushes the leg part 62 toward the bottom surface side of the engagement groove 75. For example, the inclination of the inclined surface 621 may be set such that the force Fv that pushes the leg part 62 toward the bottom surface side of the engagement groove 75 is stronger than the force Fh that pushes the leg part 62 toward the inner wall side of the V-shaped groove of the engagement groove 75.

Also, two leg parts 62 left and right are provided, and the wall parts of the engagement grooves 75 that place the leg parts 62, which correspond to the curved surfaces 620 of the leg parts 62 of the engagement grooves 75, are V-shaped, but a configuration in which only one, either the left or the right, of the engagement grooves 75 is V-shaped and the other is a rectangular groove, for example, and in which positioning is accomplished by only the one V-shaped engagement groove 75, is also possible.

### INDUSTRIAL APPLICABILITY

The present invention is preferable as a combiner type head-up display device to be mounted in a vehicle.

### DESCRIPTION OF REFERENCE NUMERALS

1: Head-up display device (HUD device)
2: Display
3: Plane mirror
4: Control board
5: Combiner
6: Combiner holder
60: Back holder
61: Front holder
62: Leg part
620: Curved surface
621: Inclined surface
7: Placement part
70: Fixing lever
700: Base member
701: Press bar (one end)
702: Bearing part
71: Shaft part
72: Through-hole
73: Stopper pin
74: Spring (urging means)
75: Engagement groove
8: Case

## Claims

1. A head-up display device that includes:
a display that emits display light;
a combiner that receives the display light and displays a virtual image;
a combiner holder that supports the combiner; and
a case that houses the display and has a placement part that places the combiner holder, wherein
the placement part has a fixing lever that is able to rotate around a predetermined shaft of the placement part,
in a state in which the combiner holder is placed on the placement part, the fixing lever fixes the combiner holder to the placement part when one end of the fixing lever rotates in one direction toward the combiner holder, and
in a state in which the combiner holder is fixed to the placement part, the fixing lever releases the fixing of the combiner holder to the placement part when the one end of the fixing lever rotates in the other direction.

2. The head-up display device according to claim 1, wherein
the combiner holder has a leg part that has a curved surface on a side surface,
the placement part has an engagement groove that places the leg part,
the engagement groove has a V-shaped inner wall that corresponds to the curved surface of the leg part, and
the curved surface is pushed against the V-shaped inner wall by the one end of the fixing lever, such that the combiner holder is fixed to the placement part.

3. The head-up display device according to claim 2, wherein
the one end of the fixing lever has a curved surface that pushes on the leg part, and
the leg part has an inclined surface on a surface that is pushed on by the curved surface of the one end.

4. The head-up display device according to any one of claims 1 to 3, comprising:
urging means for urging the one end of the fixing lever to rotate in the one direction.

5. The head-up display device according to claim 4, wherein
the urging means is a spring that pulls on the one end of the fixing lever.
